# EUROPÄISCHE PATENTSCHRIFT

(11) **EP 2 434 293 B1**
(45) Veröffentlichungstag und Bekanntmachung des Hinweises auf die Patenterteilung: **07.10.2015**
(21) Anmeldenummer: 11179358.4
(22) Anmeldetag: 30.08.2011
(51) Int. Cl.: G01N 35/00, G01N 35/04, B25J 15/00

(54) **Transport- und Manipulationshalterung**
Transport and manipulation holder
Support de transport et de manipulation

(30) Priorität: 28.09.2010 DE 102010037814
(43) Veröffentlichungstag der Anmeldung: 28.03.2012
(73) Patentinhaber: LCTech GmbH, 84405 Dorfen (DE)
(72) Erfinder: Brandlhuber, Martin, 84427 St. Wolfgang (DE); Aulwurm, Uwe, 84149 Velden/Vils (DE)
(74) Vertreter: Tetzner, Michael

(56) Entgegenhaltungen:
- EP-A1- 1 361 441
- DE-U1-202008 002 435
- US-A- 5 242 371
- US-A- 5 513 768

## Beschreibung

Die Erfindung betrifft eine Transport- und Manipulationshalterung für rohrförmige Behälter zur Aufnahme von Proben, wie sie insbesondere in Probenaufbereitungssystemen zur Anwendung kommen.

Aus der Praxis sind die unterschiedlichsten Systeme zur Aufbereitung von Proben bekannt. Sie verfügen meist über einen in x-, y- und z-Richtung verfahrbaren Transportmechanismus, mit dem Probenaufnehmer zur Aufnahme von Proben und/oder Bearbeitungsgeräte zur Bearbeitung von Proben, die insbesondere als rohrförmige Behälter ausgebildet sind. Rohrförmige Behälter zur Aufnahme/Bearbeitung von Proben, wie beispielsweise Kartuschen oder Säulen, werden vielfach in speziellen Bearbeitungsstationen angeordnet und kommen dort mit einem Manipulationsgerät, wie beispielsweise einer Nadel in Wirkkontakt, um Proben zu- oder abzuführen.

Aus der DE 20 2008 002 435 U1 ist weiterhin ein Transportadapter für rohrförmige Behälter zur Aufnahme von Proben für die Labortechnik bekannt, der in Form eines kombinierten Ein- und Aufsatzkopfes ausgebildet ist und einen einsetzbaren Stopfenabschnitt zum kopfseitigen Verschließen eines rohrförmigen Behälters sowie einen sich nach außen erstreckenden Transportkopfabschnitt umfasst und weiterhin einen abdichtbaren Durchgangskanal für das Durchstechen mittels einer Kanüle aufweist.

Der Transportkopfabschnitt ist auf seiner Außenseite so ausgebildet, dass er mit einem Greifer aufgenommen und zu einer Bearbeitungsstation verfahren werden kann. Der Stopfenabschnitt ist dabei in die Öffnung des rohrförmigen Behälters eingepresst. Hierbei handelt es sich aber um einen nur einmal verwendbaren Artikel, der darüber hinaus nur in einer Bearbeitungsstation, in welcher der rohrförmige Behälter abgestützt ist, eine sichere Verbindung gewährleistet.

Die US 5 242 371 A offenbart eine Vorrichtung zum Zentrifugieren einer Probe, wobei ein rohrförmiger Behälter an seinem offenen Ende mit einem nach Art einer Kappe ausgebildeten Adapter verschlossen wird, wobei der Adapter mit einem Ring versehen, der auf einer rotierbaren Welle aufgefädelt ist, um den am Adapter hängenden rohrförmigen Behälter in Rotation zu versetzten.

Die DE 20 2008 002 435 U1 beschreibt einen Transportadapter zur Aufnahme von Proben mit einem einsetzbaren Stopfenabschnitt zum kopfseitigen Verschließen des Behälters, einen nach außen sich erstreckenden Transportkopfabschnitt zum automatisierbaren Ergreifen und einen abdichtbaren Durchgangskanal für das Durchstechen mittels einer Kanüle.

Der Erfindung liegt daher die Aufgabe zugrunde, eine Transport- und Manipulationshalterung anzugeben, die eine sichere Halterung eines rohrförmigen Behälters auch bei einer Bearbeitung außerhalb einer Bearbeitungsstation gewährleistet.

Erfindungsgemäß wird diese Aufgabe durch die Merkmale des Anspruches 1 gelöst.

Die erfindungsgemäße Transport- und Manipulationshalterung besteht im Wesentlichen aus
a. einem Adapterring, der eine zentrale Öffnung zur Aufnahme eines rohrförmigen Behälters zur Aufnahme von Proben aufweist,
b. einem Greifer zum Greifen des Adapterrings und
c. einem Transferkopf, der zwischen einer Ruhestellung und einer Arbeitsstellung bewegbar ist, wobei es in der Arbeitsstellung mit einen im Adapterring aufgenommenen rohrförmigen Behälter in Wirkkontakt kommt, wobei der Transferkopf einen Kanal aufweist, der in der Arbeitsstellung mit dem im Adapterring aufgenommenen rohrförmigen Behälter zum Gas- oder Flüssigkeitstransfer in Verbindung steht.

Durch die Kombination des Adapterringes mit dem Transferkopf ist eine sichere Halterung des rohrförmigen Behälters möglich, die auch eine Bearbeitung außerhalb einer Bearbeitungsstation gewährleistet. Hierdurch wird die Transport- und Manipulationshalterung universeller einsetzbar.

Während der in der DE 20 2008 002 435 beschriebene Transportadapter nur in Verbindung mit speziell angepassten Säulen verwendbar ist, können bei der hier vorgeschlagenen Transport- und Manipulationshalterung auch rohrförmige Behälter beliebiger marktüblicher Ausführungen verwendet werden. Es werden lediglich für unterschiedliche Außendurchmesser der rohrförmigen Behälter entsprechend angepasste Adapterringe benötigt.

Weitere Ausgestaltungen der Erfindung sind Gegenstand der Unteransprüche.

Die rohrförmigen Behälter können an ihren oberen Enden offen oder mit einem Verschlussmechanismus verschlossen ausgebildet sein. Bei offenen rohrförmigen Behältern wird der Transferkopf zweckmäßigerweise als Verschlusselement ausgebildet, das den im Adapterring aufgenommenen rohrförmigen Behälter in der Arbeitsstellung flüssigkeits- und/oder gasdicht verschließt und ihn in der Ruhestellung freigibt. Bei einem verschlossenen rohrförmigen Behälter kann der Transferkopf eine Nadel oder dgl. zum Einstechen in den Verschlussmechanismus des rohrförmigen Behälters aufweisen.

In beiden Varianten des Transferkopfes können aber die nachfolgend aufgeführten weiteren Ausgestaltungen vorgesehen werden.

Gemäß einer bevorzugten Ausgestaltung der Erfindung ist die Transport- und Manipulationshalterung an einem in x-, y- und z-Richtung verfahrbaren Transportsystem angebracht. Weiterhin kann der Adapterring auf seiner äußeren Umfangsfläche wenigstens eine Vertiefung aufweisen, die mit dem Greifer in Greifkontakt kommt. Die Ausführung der Greifbewegung des Greifers erfolgt beispielsweise über eine Kulissenführung. Der Greifer und der Transferkopf können dabei einen gemeinsamen, eine Kulissenführung aufweisenden Bewegungsmechanismus aufweisen können. Außerdem ist es zweckmäßig, wenn der Greifer und der Transferkopf in einem gemeinsamen Gehäuse gehaltert sind.

Weiterhin schließt sich an die zentrale Öffnung des Adapterringes ein Flächenbereich an, der zum Abstützen eines flanschartig erweiterten Randes des rohrförmigen Behälters dient. Der Transferkopf selbst wird beispielsweise durch einen geradlinig bewegbaren Stempel gebildet, während der Greifer wenigstens zwei um jeweils eine Schwenkachse verschwenkbare Greifbacken aufweist.

Die Kulissenführung kann wenigstens eine, vorzugsweise zwei Kulissen aufweisen, die in einem Mittelbereich um eine Schwenkachse schwenkbar gehaltert sind, wobei der sich von der Schwenkachse zum einen Ende erstreckende Teil einen Schlitz, einen Steg oder eine Nut aufweist und mit einem Kulissenstein zusammenwirkt und der sich von der Schwenkachse zum anderen Ende erstreckenden Teil wenigstens einen Teil des Greifers trägt. Dabei kann weiterhin vorgesehen werden, dass der Kulissenstein an einem Schieber gehaltert ist, wobei die Bewegung des Schiebers eine Verschiebung des Kulissensteins in der Kulisse und dadurch zumindest teilweise ein Verschwenken der Kulisse um die Schwenkachse bewirkt. Weiterhin kann auch der Transferkopf am Schieber befestigt sein.

Der Transferkopf kann weiterhin einen durch den Transferkopf geführten Kanal zum Gas- oder Flüssigkeitstransfer aufweisen, der in der Verschlussstellung des Transferkopfs im Bereich der zentralen Öffnung des Adapterrings mündet und dadurch mit einem im Adapterring aufgenommen rohrförmigen Behälter zum Fluidaustausch in Verbindung steht.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung der Transport- und Manipulationshalterung vor dem Greifen eines rohrförmigen Behälters,
- Fig. 2: eine dreidimensionale Darstellung der Transport- und Manipulationshalterung mit gegriffenem Adapterring und dem Transferkopf in der Ruhestellung,
- Fig. 3: eine dreidimensionale Darstellung der Transport- und Manipulationshalterung mit gegriffenem Adapterring und dem Transferkopf in der Arbeitstellung,
- Fig. 4: eine Schnittdarstellung im Bereich von Transferkopf und Adapterring in der Stellung gemäß Fig. 3,
- Fig. 5: eine Draufsicht des Adapterrings,
- Fig. 6: eine Schnittdarstellung des Adapterrings längs der Linie A-A der Fig. 5 und
- Fig. 7: eine Schnittdarstellung einer Transport- und Manipulationshalterung in der Arbeitsstellung des Transferkopfes gemäß einem zweiten Ausführungsbeispiel.

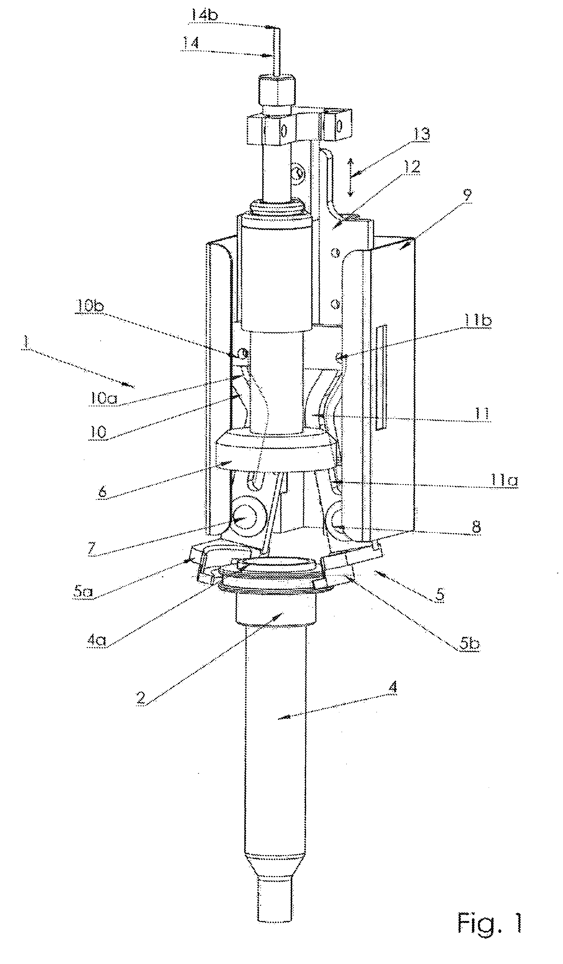

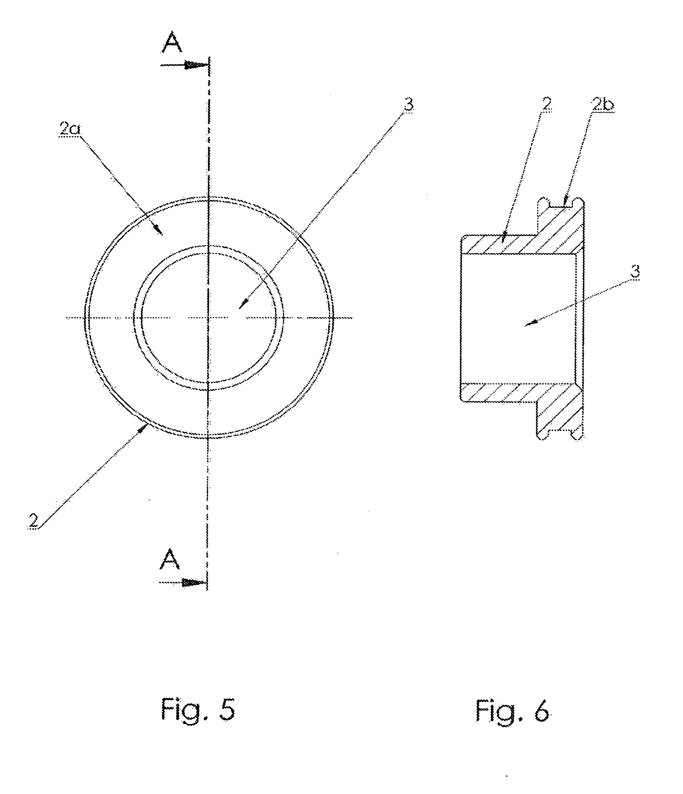

In den Figuren 1 bis 3 ist eine Transport- und Manipulationshalterung 1 in verschiedenen Betriebsstellungen dargestellt. Sie besteht im Wesentlichen aus einem in den Figuren 5 und 6 näher dargestellten Adapterring 2, der eine zentrale Öffnung 3 zur Aufnahme eines rohrförmigen Behälters 4 aufweist, einem Greifer 5 zum Greifen des Adapterrings 2 und einem Transferkopf 6.

An die zentrale Öffnung 3 des Adapterrings 2 schließt sich ein Flächenbereich 2a an, der zum Abstützen eines flanschartig erweiteten Randes 4a des rohrförmigen Behälters 4 dient. Der Adapterring 2 weist ferner auf einer äußeren Umfangsfläche eine umlaufende Nut oder Vertiefung 2b auf, die mit dem Greifer 5 in Greifkontakt kommt. Der Greifer 5 weist hierfür zwei um jeweils eine Schwenkachse 7, 8 verschwenkbare Greifbacken 5a, 5b auf.

Die Transport- und Manipulationshalterung sieht ferner ein Gehäuse 9 vor, in der eine Kulissenführung mit zwei Kulissen 10, 11 angeordnet ist, die in einem Mittelbereich um die Schwenkachsen 7, 8 schwenkbar im Gehäuse 9 gehaltert sind. Der sich von der Schwenkachse 7 bzw. 8 nach oben erstreckende Teil weist jeweils einen Schlitz 10a, 11a auf, während der sich nach unten erstreckende Teil die beiden Greifbacken 5a bzw. 5b trägt.

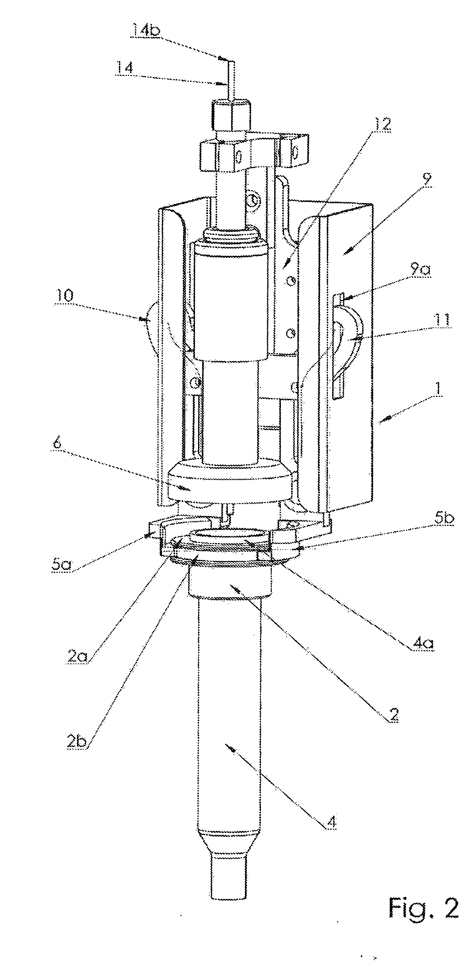

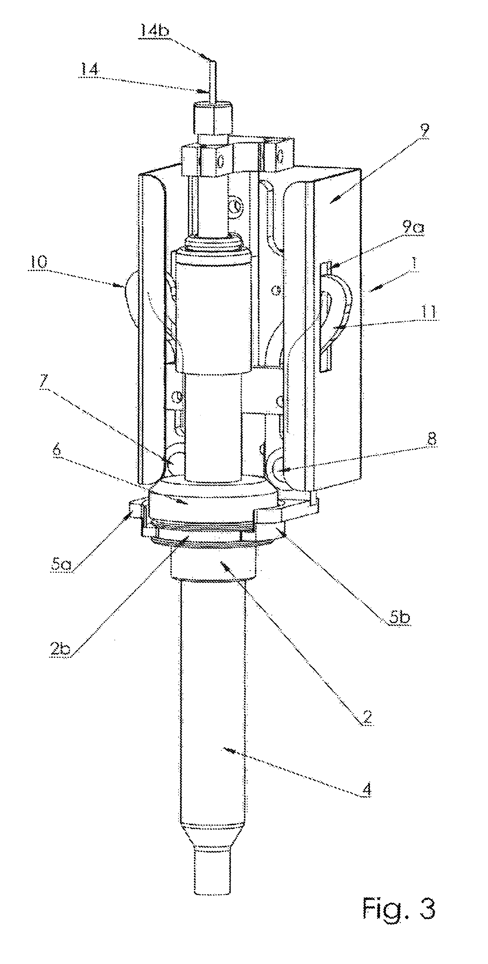

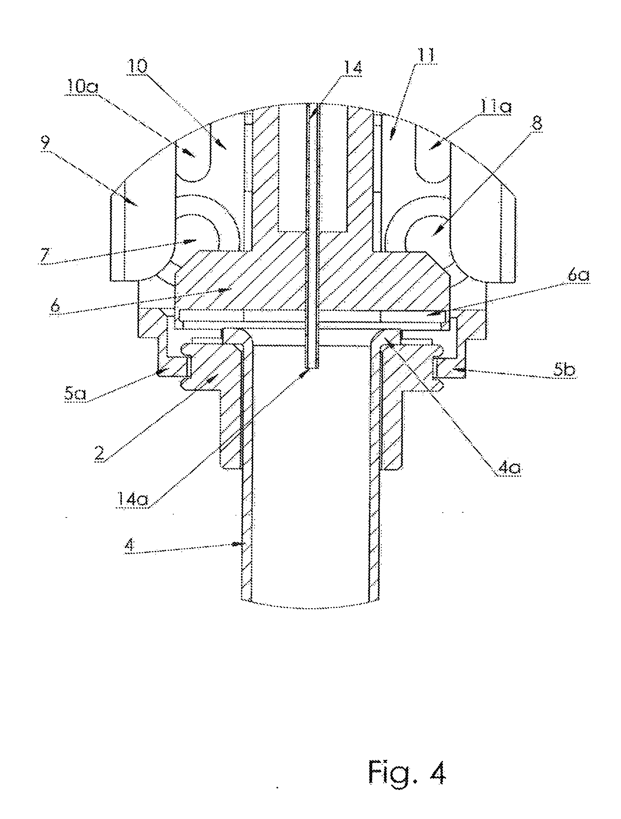

Im Gehäuse 9 ist weiterhin eine relativ zu diesem verschiebbarer Schieber 12 vorgesehen, der an seinem unteren Ende den Transferkopf 6 trägt, das nach Art eines Stempels ausgebildet ist. Weiterhin sind am Schieber 12 zwei Kulissensteine 10b, 11b gehaltert, die in den Schlitz 10a bzw. 11a derart eingreifen, dass eine Bewegung des Schiebers 12 eine Verschiebung der Kulissensteine 10b bzw. 11b in den Schlitzen 10a bzw. 11a bewirkt, wobei während einer ersten Verschiebestrecke des Schiebers 12 ein Verschwenken der Kulissen 10, 11 um die Schwenkachsen 7, 8 erfolgt. Dadurch schwenken die beiden Schwenkbacken 5a, 5b des Greifers aufeinander zu und kommen mit der Vertiefung 2b des Adapterrings 2 in Greifkontakt (siehe Fig.2). Sobald der Greifkontakt hergestellt ist, sind die Schlitze 10a, 11a parallel zur Schieberichtung (Doppelpfeil 13) ausgerichtet, sodass mit einer weiteren Bewegung des Schiebers 12 den Transferkopf 6 von seiner Ruhestellung gemäß Fig.2. weiter in Richtung auf den rohrförmigen Behälter 4 abgesenkt wird, bis der Transferkopf in seiner Arbeitsstellung gemäß Fig.3 den im Adapterring aufgenommenen rohrförmigen Behälter 4 flüssigkeits- und/oder gasdicht verschließt. Hierzu ist die mit dem flanschartig erweiteten Rand 4a in Kontakt kommende Stirnfläche des Transferkopfs 6 mit einem geeigneten Dichtelement 6a (siehe Fig. 4) versehen.

Im dargestellten Ausführungsbeispiel ist das Gehäuse 9 relativ schmal ausgebildet, sodass die Kulissen 10, 11 in der Phase zwischen der Ruhestellung des Transferkopfs gemäß Fig. 2 und der Arbeitsstellung des Transferkopfs gemäß Fig. 3 durch seitliche Schlitze 9a aus dem Gehäuse 9 herausragen.

Die Ansteuerung des Schiebers 12 kann mit jedem geeigneten Aktuator erfolgen.

Fig. 4 zeigt eine Schnittdarstellung im Bereich des Transferkopfes in der Stellung gemäß Fig. 3. Hieraus wird ersichtlich, dass der rohrförmige Behälter 4 im Bereich seines flanschartigen Randes 4a am Adapterring 2a gehaltert ist, der wiederum durch die Greifbacken 5a, 5b fixiert wird, während der Transferkopf 6 mit seinem Dichtelement 6a auf den flanschartig erweiteten Rand 4a des rohrförmigen Behälters 4 drückt und diesen dadurch flüssigkeits- und/oder gasdicht verschließt.

Der Transferkopf 6 weist zudem einen zentralen Kanal 14 auf, der an seinem unteren Ende 14a in der Arbeitsstellung des Transferkopfes 6 im oberen Bereich des rohrförmigen Behälters 4 mündet. Das obere Ende 14b des Kanals 14 (siehe Figuren 1 bis 3) steht über eine nicht näher gezeigte Leitung mit ein oder mehreren Fluidbehältern oder mit einem Probenaufnehmer in Verbindung. Der zentrale Kanal 14 steht somit in der Arbeitstellung gemäß Fig. 3 mit dem im Adapterring 2 aufgenommenen rohrförmigen Behälter 4 zum Fluidaustausch in Verbindung.

Nähere Ausgestaltungen in diesem Zusammenhang können der älteren Anmeldung DE 10 2010 037 084 entnommen werden, auf die hiermit Bezug genommen wird. Die Transport- und Manipulationshalterung 1, die in der DE 10 2010 037 084 als Handhabungsgerät bezeichnet ist, kann somit insbesondere an einem in x-, y- und z-Richtung verfahrbaren Transportsystem angebracht werden, wobei die Transport- und Manipulationshalterung 1 in z-Richtung verfahrbar ist.

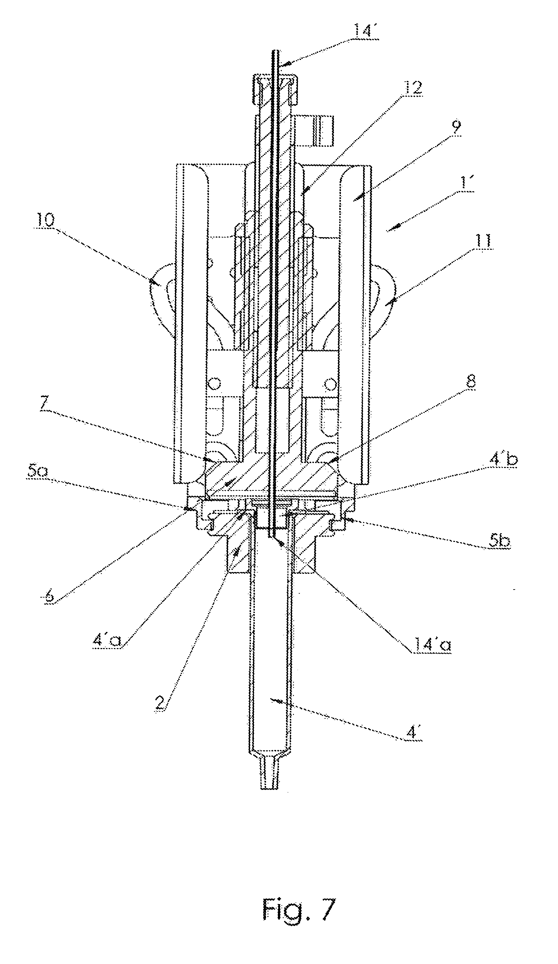

In Fig. 7 ist ein zweites Ausführungsbeispiel einer Transport- und Manipulationshalterung 1' gezeigt, welche mit einem rohrförmigen Behälter 4' zusammenwirkt, der ebenfalls über einen flanschartig erweiterten Rand 4'a im Adapterring gehaltert ist, aber zusätzlich noch durch einen Verschlussmechanismus 4'b verschlossen ist.

Die Kulissenführung mit dem Greifbacken 5a, 5b und der Transferkopf 6 sind entsprechend dem ersten Ausführungsbeispiel ausgeführt und werden daher nicht nochmals näher erläutert. Der Unterschied besteht im Wesentlichen darin, dass der zentrale Kanal 14' an seinem unteren Ende 14'a als Nadel zum Einstechen in den Verschlussmechanismus 4'b des rohrförmigen Behälters 4' ausgebildet ist, um auf diese Weise mit dem rohrförmigen Behälter zum Fluidaustausch in Verbindung zu kommen.

Die beiden oben beschriebenen Ausführungsbeispiele ermöglichen durch die sichere Halterung des rohrförmigen Behälters eine Bearbeitung etwaige Proben auch außerhalb von stationären Bearbeitungsstationen. So ist es insbesondere möglich, dass über die mit dem Kanal verbundene Leitung von hinten Flüssigkeiten oder Gase zugeführt werden. Bei einer Ausbildung gemäß der DE 10 2010 037 084 können Proben, welche über den Probennehmer aufgenommen wurden, direkt der Transport- und Manipulationshalterung 1 zur weiteren Bearbeitung zugeführt werden. Da unnötige Verfahrwege vermieden werden, ist eine äußerst effiziente und schnelle Bearbeitung von Proben möglich.

Die Halterung des Adapterrings mit den Greifbacken 5a, 5b ermöglicht eine sehr sichere und zuverlässige Halterung, die auch Bearbeitungen der Proben bei höheren Druck- und Zugkräften, wie sie bei hohen Flussraten bzw. beim Abziehen einer Nadel oder Stopfens auftreten können, erlaubt.

## Patentansprüche

1. Transport- und Manipulationshalterung (1, 1') mit
a. einem Adapterring (2), der eine zentrale Öffnung (3) zur Aufnahme eines rohrförmigen Behälters (4, 4') zur Aufnahme von Proben aufweist,
b. einem Greifer (5) zum Greifen des Adapterrings (2) und,
c. einem Transferkopf (6), der zwischen einer Ruhestellung und einer Arbeitsstellung bewegbar ist, wobei er in der Arbeitsstellung mit einem im Adapterring aufgenommenen rohrförmigen Behälter in Wirkkontakt kommt, wobei der Transferkopf einen Kanal (14) aufweist, der in der Arbeitsstellung mit dem im Adapterring aufgenommenen rohrförmigen Behälter zum Gas- oder Flüssigkeitstransfer in Verbindung steht.

2. Transport- und Manipulationshalterung nach Anspruch 1, **dadurch gekennzeichnet, dass** der Transferkopf (6) als Verschlusselement ausgebildet ist, der den im Adapterring aufgenommenen rohrförmigen Behälter (4) in der Arbeitsstellung flüssigkeits- und/oder gasdicht verschließt und ihn in der Ruhestellung freigibt.

3. Transport- und Manipulationshalterung nach Anspruch 1, **dadurch gekennzeichnet, dass** der Transferkopf (6) eine Nadel zum Einstechen in einen Verschlussmechanismus (4'b) des rohförmigen Behälters (4') umfasst.

4. Transport- und Manipulationshalterung nach Anspruch 1, **dadurch gekennzeichnet, dass** die Transport- und Manipulationshalterung an einem in x- , y- und z-Richtung verfahrbaren Transportsystems angebracht ist.

5. Transport- und Manipulationshalterung nach Anspruch 1, **dadurch gekennzeichnet, dass** der Adapterring (2) auf seiner äußeren Umfangsfläche wenigstens eine Vertiefung (2b) aufweist, die mit dem Greifer (5) in Greifkontakt kommt.

6. Transport- und Manipulationshalterung nach Anspruch 1, **dadurch gekennzeichnet, dass** zur Ausführung einer Greifbewegung des Greifers (5) eine Kulissenführung vorgesehen ist.

7. Transport- und Manipulationshalterung nach Anspruch 1, **dadurch gekennzeichnet, dass** sich an die zentrale Öffnung (3) des Adapterrings (2) ein Flächenbereich (2a) anschließt, der zum Abstützen eines flanschartig erweiterten Randes (4a. 4'a) eines rohrförmigen Behälters (4, 4') dient.

8. Transport- und Manipulationshalterung nach Anspruch 1, **dadurch gekennzeichnet, dass** der Greifer (5) und der Transferkopf (6) einen gemeinsamen, eine Kulissenführung aufweisenden Bewegungsmechanismus aufweisen.

9. Transport- und Manipulationshalterung nach Anspruch 1, **dadurch gekennzeichnet, dass** der Greifer (5) und der Transferkopf (6) in einem gemeinsamen Gehäuse (9) gehaltert sind.

10. Transport- und Manipulationshalterung nach Anspruch 1, **dadurch gekennzeichnet, dass** der Transferkopf (6) als geradlinig bewegbarer Stempel ausgebildet ist.

11. Transport- und Manipulationshalterung nach Anspruch 1, **dadurch gekennzeichnet, dass** der Greifer (5) wenigstens zwei um jeweils eine Schwenkachse (7, 8) verschwenkbare Greifbacken (5a, 5b) aufweist.

12. Transport- und Manipulationshalterung nach Anspruch 1, **dadurch gekennzeichnet, dass** die Kulissenführung wenigstens eine Kulisse (10, 11) aufweist, die in einem Mittelbereich um eine Schwenkachse (7, 8) schwenkbar gehaltert ist, wobei der sich von der Schwenkachse zum einen Ende erstreckende Teil einen Schlitz (10a, 11a), einen Steg oder eine Nut aufweist und mit einem Kulissenstein zusammenwirkt und der sich von der Schwenkachse (7, 8) zum anderen Ende erstreckende Teil wenigstens einen Teil des Greifers (5) trägt.

13. Transport- und Manipulationshalterung nach Anspruch 12, **dadurch gekennzeichnet, dass** der Kulissenstein (10b, 11b) an einem Schieber (12) gehaltert ist, wobei eine Bewegung des Schiebers eine Verschiebung des Kulissensteins (10b, 11b) in der Kulisse (10, 11) und zumindest teilweise ein Verschwenken der Kulisse um die Schwenkachse (7, 8) bewirkt.

14. Transport- und Manipulationshalterung nach Anspruch 13, **dadurch gekennzeichnet, dass** der Transferkopf (6) am Schieber (12) befestigt ist.

## Claims

1. Transport and handling retention member (1, 1') having
a. an adapter ring (2) which has a central opening (3) for receiving a tubular container (4, 4') for receiving samples,
b. a gripping member (5) for gripping the adapter ring (2) and
c. a transfer head (6) which can be moved between a rest position and an operating position, the transfer head in the operating position coming into operational contact with a tubular container which is received in the adapter ring, wherein the transfer head has a channel (14) which is connected in the operating position to the tubular container received in the adapter ring for the transfer of gas or liquid.

2. Transport and handling retention member according to claim 1, **characterised in that** the transfer head (6) is constructed as a closure element which closes the tubular container (4) received in the adapter ring in a liquid and/or gas-tight manner in the operating position and releases it in the rest position.

3. Transport and handling retention member according to claim 1, **characterised in that** the transfer head (6) comprises a needle for being inserted into a closure mechanism (4'b) of the tubular container (4').

4. Transport and handling retention member according to claim 1, **characterised in that** the transport and handling retention member is fitted to a transport system which can be moved in the x, y and z direction.

5. Transport and handling retention member according to claim 1, **characterised in that** the adapter ring (2) has at the outer peripheral face thereof at least one recess (2b) which comes into gripping contact with the gripping member (5).

6. Transport and handling retention member according to claim 1, **characterised in that**, in order to carry out a gripping movement of the gripping member (5), a slotted guiding member is provided.

7. Transport and handling retention member according to claim 1, **characterised in that** the central opening (3) of the adapter ring (2) is adjoined by a surface region (2a) which serves to support an edge (4a, 4'a) of a tubular container (4, 4') that extends in a flange-like manner.

8. Transport and handling retention member according to claim 1, **characterised in that** the gripping member (5) and the transfer head (6) have a common movement mechanism which has a slotted guiding member.

9. Transport and handling retention member according to claim 1, **characterised in that** the gripping member (5) and the transfer head (6) are retained in a common housing (9).

10. Transport and handling retention member according to claim 1, **characterised in that** the transfer head (6) is constructed in the form of a piston which can be moved in a linear manner.

11. Transport and handling retention member according to claim 1, **characterised in that** the gripping member (5) has at least two gripping jaws (5a, 5b) which can each be pivoted about a pivot axis (7, 8).

12. Transport and handling retention member according to claim 1, **characterised in that** the slotted guiding member has at least one slotted member (10, 11) which is retained in a central region so as to be able to be pivoted about a pivot axis (7, 8), the portion which extends from the pivot axis to one end having a slot (10a, 11a), a web or a groove and cooperating with a sliding element and the portion which extends from the pivot axis (7, 8) to the other end carrying at least a portion of the gripping member (5).

13. Transport and handling retention member according to claim 12, **characterised in that** the sliding element (10b, 11b) is retained on a sliding member (12), a movement of the sliding member bringing about a displacement of the sliding element (10b, 11b) in the slotted member (10, 11) and at least partially bringing about pivoting of the slotted member about the pivot axis (7, 8).

14. Transport and handling retention member according to claim 13, **characterised in that** the transfer head (6) is secured to the sliding member (12).

## Revendications

1. Fixation de transport et de manipulation (1, 1') comprenant
a. un anneau adaptateur (2) qui présente une ouverture centrale (3) servant au logement d'un récipient de forme tubulaire (4, 4') servant à la réception d'échantillons,
b. un élément préhenseur (5) servant à la préhension de l'anneau adaptateur (2), et
c. une tête de transfert (6) qui peut être déplacée entre une position de repos et une position de travail où, dans la position de travail, ladite tête de transfert vient en contact actif avec un récipient de forme tubulaire logé dans l'anneau adaptateur, où la tête de transfert présente un conduit (14) qui, dans la position de travail, communique avec le récipient de forme tubulaire logé dans l'anneau adaptateur, pour le transfert de gaz ou de liquides.

2. Fixation de transport et de manipulation selon la revendication 1, **caractérisée en ce que** la tête de transfert (6) est conçue comme un élément de fermeture qui, dans la position de travail, obture de façon étanche aux liquides et/ou aux gaz le récipient de forme tubulaire (4) logé dans l'anneau adaptateur, et le libère dans la position de repos.

3. Fixation de transport et de manipulation selon la revendication 1, **caractérisée en ce que** la tête de transfert (6) comprend une aiguille servant à percer dans un mécanisme de fermeture (4'b) du récipient de forme tubulaire (4').

4. Fixation de transport et de manipulation selon la revendication 1, **caractérisée en ce que** la fixation de transport et de manipulation est fixée sur un système de transport pouvant se déplacer dans une direction x, y et z.

5. Fixation de transport et de manipulation selon la revendication 1, **caractérisée en ce que** l'anneau adaptateur (2) présente, sur sa surface de circonférence extérieure, au moins une partie en creux (2b) qui vient en contact de préhension avec l'élément préhenseur (5).

6. Fixation de transport et de manipulation selon la revendication 1, **caractérisée en ce qu'**il est prévu un guide de coulisse pour l'exécution d'un mouvement de préhension de l'élément préhenseur (5).

7. Fixation de transport et de manipulation selon la revendication 1, **caractérisée en ce qu'**une zone de surface plane (2a) fait suite à l'ouverture centrale (3) de l'anneau adaptateur (2), zone de surface plane qui sert à supporter un bord (4a, 4'a) d'un récipient de forme tubulaire (4, 4'), ledit bord étant élargi en forme de bride.

8. Fixation de transport et de manipulation selon la revendication 1, **caractérisée en ce que** l'élément préhenseur (5) et la tête de transfert (6) présentent un mécanisme de mouvement commun présentant un guide de coulisse.

9. Fixation de transport et de manipulation selon la revendication 1, **caractérisée en ce que** l'élément préhenseur (5) et la tête de transfert (6) sont maintenus dans un logement commun (9).

10. Fixation de transport et de manipulation selon la revendication 1, **caractérisée en ce que** la tête de transfert (6) est conçue comme un poinçon pouvant se déplacer de façon rectiligne.

11. Fixation de transport et de manipulation selon la revendication 1, **caractérisée en ce que** l'élément préhenseur (5) présente au moins deux mâchoires de préhension (5a, 5b) pouvant pivoter à chaque fois autour d'un axe de pivotement (7, 8).

12. Fixation de transport et de manipulation selon la revendication 1, **caractérisée en ce que** le guide de coulisse présente au moins une coulisse (10, 11) qui est maintenue de façon à pouvoir pivoter autour d'un axe de pivotement (7, 8) dans une zone centrale, où la partie s'étendant depuis l'axe de pivotement jusqu'à une extrémité présente une fente (10a, 11a), une nervure ou une rainure et agit de façon conjointe avec un coulisseau, et la partie s'étendant depuis l'axe de pivotement (7, 8) jusqu'à l'autre extrémité supporte au moins une partie de l'élément préhenseur (5).

13. Fixation de transport et de manipulation selon la revendication 12, **caractérisée en ce que** le coulisseau (10b, 11b) est fixé sur un tiroir (12), où un mouvement du tiroir déclenche un déplacement du coulisseau (10b, 11b) dans la coulisse (10, 11) et au moins partiellement un pivotement de la coulisse autour de l'axe de pivotement (7, 8).

14. Fixation de transport et de manipulation selon la revendication 13, **caractérisée en ce que** la tête de transfert (6) est fixée sur le tiroir (12).
